# EUROPEAN PATENT SPECIFICATION

(11) **EP 3 123 551 B1**
(45) Date of publication and mention of the grant of the patent: **29.04.2020**
(21) Application number: 15768754.2
(22) Date of filing: 26.03.2015
(51) Int. Cl.: H01M 8/1253, H01M 8/02, C01G 25/02, C01G 49/00, C04B 35/486, C04B 35/626, H01M 8/0215, H01M 4/88

(54) **ELECTROLYTE DOPANT SYSTEM**
ELEKTROLYTDOTIERSYSTEM
SYSTÈME DE DOPANT D'ÉLECTROLYTE

(30) Priority: 28.03.2014 US 201461971991 P
(43) Date of publication of application: 01.02.2017
(73) Proprietor: Saint-Gobain Ceramics & Plastics Inc., Worcester, Massachusetts 01615-0138 (US)
(72) Inventor: MOHANRAM, Aravind, Northborough, Massachusetts 01532 (US)
(74) Representative: Zimmermann & Partner Patentanwälte mbB
(86) International application number: PCT/US2015/022777
(87) International publication number: WO 2015/148818

(56) References cited:
- US-A1- 2004 018 409
- US-A1- 2010 167 170
- US-A1- 2010 167 170
- US-A1- 2011 294 039
- US-B2- 8 334 079
- YINGYI HUANG ET AL: "An Examination of LSM-LSCo Mixtures for Use in SOFC Cathodes", JOURNAL OF THE ELECTROCHEMICAL SOCIETY, [Online] vol. 153, no. 6, 6 April 2006 (2006-04-06) , pages A951-A955, XP055408383, US ISSN: 0013-4651, DOI: 10.1149/1.2186183 Retrieved from the Internet: URL:http://jes.ecsdl.org/content/153/6/A95 1.abstract> [retrieved on 2017-09-20]
- ZHANG T S ET AL: "Transitional metal-doped 8 mol% yttria-stabilized zirconia electrolytes", SOLID STATE IONICS, NORTH HOLLAND PUB. COMPANY. AMSTERDAM; NL, NL, vol. 180, no. 23-25, 5 October 2009 (2009-10-05), pages 1311-1317, XP026585904, ISSN: 0167-2738, DOI: 10.1016/J.SSI.2009.08.004 [retrieved on 2009-09-01]
- ALI ET AL: "Impedance spectroscopy of YSZ electrolyte containing CuO for various applications", SOLID STATE IONICS, NORTH HOLLAND PUB. COMPANY. AMSTERDAM; NL, NL, vol. 178, no. 25-26, 1 October 2007 (2007-10-01), pages 1463-1466, XP022321414, ISSN: 0167-2738, DOI: 10.1016/J.SSI.2007.07.015
- BENYOUCEF, AMEL ET AL.: 'Development and characterisation of (Ni, Cu, Co)-YSZ and Cu-Co-YSZ cermets anode materials for SOFC application' SURFACE & COATINGS TECHNOLOGY vol. 202, no. ISSUE, 18 September 2007, pages 2202 - 2207, XP022419866

## Description

### FIELD OF THE DISCLOSURE

The present invention relates to an electrolyte of a solid oxide fuel cell and processes of forming the same.

### DESCRIPTION OF RELATED ART

A fuel cell is an energy conversion device that transforms chemical energy into electric power through the electrochemical oxidation of fuel. A typical fuel cell includes a cathode, an anode, and an electrolyte between the cathode and the anode. Among various fuel cells, solid oxide fuel cells (SOFCs) use a hard, ceramic compound metal oxide as an electrolyte. Typically, in a solid oxide fuel cell (SOFC), oxygen gas (O₂) is reduced to oxygen ions (O⁻²) at the cathode, and at the anode a fuel gas such as hydrogen (H₂) or a hydrocarbon such as methane (CH₄) is oxidized with the oxygen ions to form water and carbon dioxide (from hydrocarbon).

In some instances, fuel cell assemblies have been designed as stacks. A single solid oxide fuel cell includes a cathode, an anode, and a solid electrolyte between the cathode and the anode. Each cell can be considered a subassembly, which can be combined with other cells to form a full SOFC stack. In assembling the SOFC stack, electrical interconnects can be disposed between the cathode of one cell and the anode of another cell.

Components of an SOFC can be susceptible to damage caused by fluctuation in temperature during their formation or use. Specifically, materials employed to form the various components, including ceramics of differing compositions, exhibit distinct material, chemical, and electrical properties that can result in breakdown and failure of the SOFC article. In particular, fuel cells have a limited tolerance for changes in temperature. Problems associated with mechanical stress caused by changes in temperature can be exacerbated when forming two or more different components of an SOFC together. As a result, limitations may be imposed on certain processes for forming an SOFC, which may limit the yield of production or posing a heightened risk of failure during operation.
Yingyi Huang et al. (An Examination of LSM-LSCo Mixtures for Use in SOFC Cathodes, Journal of the Electrochemical Society vol. 153, pages A951-A955 (2006)) discloses a SOFC cathode composite of yttria-stabilized zirconia (YSZ) and mixed perovskites with the average composition La_{0.8}Sr_{0.2}Mn₍₁₋ₓ₎CoₓO₃-YSZ (x = 0, 0.1, 0.25 and 0.5) and with total loadings of 40 wt% perovskite.
US 2010/167170 A1discloses a SOFC electrolyte comprising yttria-stabilized zirconia (YSZ) co-doped with aluminum oxide and manganese oxide.
T.S. Zhang et al. (Transitional metal-doped 8 mol% yttria-stabilized zirconia electrolytes, Solid State Ionics 180, pages 1311-1317 (2009)) discloses that small additions of transitional metal oxides (i.e. Fe, Mn, Co or Ni) promote the densification and grain growth of both the pure and Si-containing 8YSZ. M. El-sayed Ali et al. (Impedance spectroscopy of YSZ electrolyte containing CuO for various applications, Solid State Ionics 178, pages 1463-1466 (2007)) discloses electrical properties of yttria-stabilized zirconia (YSZ) electrolyte containing different amounts of CuO (0-1 mol%).

### BRIEF DESCRIPTION OF THE DRAWINGS

While the specification concludes with claims distinctly pointing out the subject matter that Applicants regard as their invention, it is believed that the invention will be better understood when taken in connection with the accompanying drawings in which:
FIG. 1 illustrates a solid oxide fuel cell (SOFC) article;
FIG. 2 illustrates a method of forming an SOFC;
FIG. 3 is a graph illustrating the effect of dopants on peak sintering temperature (Tₚₑₐₖ) of YSZ; and
FIG. 4 illustrates the effect of Fe dopant on YSZ.

### DETAILED DESCRIPTION OF THE PREFERRED EMBODIMENT(S)

The present disclosure is related to components of solid oxide fuel cell articles and methods of forming components of solid oxide fuel cell articles.

Subject matter of the present invention is a component of a solid oxide fuel cell as defined in claim 1, and a method of forming a component of a solid oxide fuel cell as defined in claim 5. The dependent claims relate to particular embodiments thereof.

The component of a solid oxide fuel cell according to claim 1 comprises an electrolyte including a stabilized zirconia doped with at least three different dopants including Mn, Al, and Fe. The stabilized zirconia includes Mn in an amount of not greater than 5 at%, Al in an amount of not greater than 3 at%, and Fe in an amount of at least 4 at% and not greater than 8 at%. The electrolyte has a density of at least 92% of theoretical density, calculated based on Archimedes' principle.

The method of forming a component of a solid oxide fuel cell according to claim 5 comprises providing a stabilized zirconia powder having stabilized zirconia particles having a d50 particle size of at least 150 nm; combining the stabilized zirconia powder with at least three dopants including Mn, Al, and Fe to form a component precursor; and sintering the component precursor at a temperature of not greater than 1120 °C to form a component having a density of at least 96% of theoretical density.

The following description in combination with the figures is provided to assist in understanding the teachings disclosed herein. The following discussion will focus on specific implementations and embodiments of the teachings. This focus is provided to assist in describing the teachings and should not be interpreted as a limitation on the scope or applicability of the teachings.

As used herein, the terms "comprises," "comprising," "includes, " "including, " "has, " "having," or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

The use of "a" or "an" is employed to describe elements and components described herein. This is done merely for convenience and to give a general sense of the scope of the invention. This description should be read to include one or at least one and the singular also includes the plural, or vice versa, unless it is clear that it is meant otherwise.

Unless otherwise defined, all technical and scientific terms used herein have the same meaning as commonly understood by one of ordinary skill in the art to which this invention belongs. The materials, methods, and examples are illustrative only and not intended to be limiting. To the extent not described herein, many details regarding specific materials and processing acts are conventional and may be found in textbooks and other sources within the solid oxide fuel cell arts.

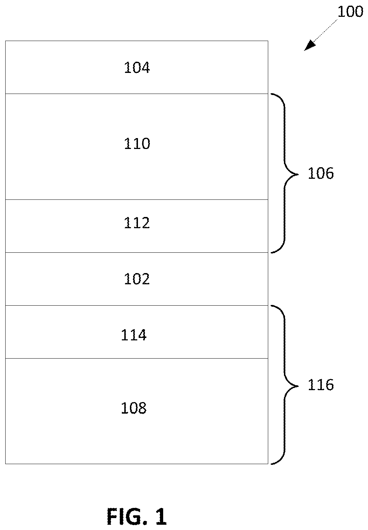

Referring to FIG. 1 a solid oxide fuel cell (SOFC) unit cell is illustrated and generally designated 100. SOFC unit cell 100 can include an anode 106, an electrolyte 102, and a cathode 116. The anode 106 can include an anode bulk layer (ABL) 110 and an anode functional layer (AFL) 112. The AFL 112 can be disposed between and in direct contact with the ABL 110 and the electrolyte 102. Likewise, the cathode layer 116 can include a cathode bulk layer (CBL) 108 and a cathode functional layer (CFL) 114. The CFL 114 can be disposed between and in direct contact with the CBL 108 and the electrolyte 102.

In some instances, fuel cell assemblies can be designed as subcells, which can include an anode disposed on one side of an electrolyte and a cathode disposed on another side of the electrolyte. In an example, each subcell can be combined in stacks with other subcells to form a full SOFC article. In an example of an SOFC, such as an SOFC stack or full SOFC article, interconnects can be disposed between the cathode of one subcell and the anode of another subcell, particularly on a side of the anode or cathode opposite the electrolyte. As illustrated in FIG. 1, the interconnect 104 can be disposed on a side of the anode 106 opposite the electrolyte 102, such as on a side of ABL 110 opposite the electrolyte 102. Although not illustrated in FIG. 1, a cathode of another subcell can be disposed on a side of the interconnect 104 opposite the anode 106.

Typically, in a solid oxide fuel cell (SOFC), oxygen gas (O₂) is reduced to oxygen ions (O⁻²) at the cathode, and at the anode a fuel gas such as hydrogen (H₂) or a hydrocarbon such as methane (CH₄) is oxidized with the oxygen ions to form water and carbon dioxide (from hydrocarbon). An electrolyte between the anode and the cathode functions to substantially prevent the mixing of the fuel and oxidant gases from the anode and cathode and to allow the transport of oxygen ions across the electrolyte from the cathode to the anode.

Thus, an electrolyte can include particular properties that may assist in the aforementioned functions. For example, an electrolyte can have a particular theoretical density to assist in substantially preventing the mixing of the fuel and oxidant gasses from the anode and cathode. To ensure functionality of an SOFC, the electrolyte of the component according to the present invention of a solid oxide fuel cell has a density that is at least 92%. At a density of not greater than 91%, a significant portion of the pores of the component are connected. As disclosed herein, the electrolyte 102 can have a theoretical density of at least 93%, such as at least 94%, at least 95%, at least 96%, at least 97%, at least 98%, at least 99%, or even 100%. As further disclosed herein, an electrolyte may have a density that is substantially gastight. As used herein, gastight is used synonymously with full density, and is defined as having a density of at least 98%. Conversely, the electrolyte 102 can have a particular porosity. As disclosed herein, the electrolyte 102 can have a porosity of not greater than 5 vol%, such as not greater than 4 vol%, not greater than 3 vol%, not greater than 2 vol%, or not greater than 1 vol%. Some residual porosity may remain in the electrolyte. However, any such residual porosity is typically closed porosity and does not form an interconnected network. As disclosed herein, the porosity can include open porosity and closed porosity. As further disclosed herein, at least a majority of the porosity comprises closed porosity, such as at least about 75%, or even at least about 90%. After reading the specification, a skilled artisan will appreciate that the density, open porosity, and closed porosity can be calculated based on Archimedes Principle.

In a typical component of an SOFC, such as an electrolyte, an increased thickness can offer increased structural integrity, but may also tend to increase electrical resistance. As disclosed herein, the electrolyte 102 can have a thickness of not greater than 250 microns. As further disclosed herein, the electrolyte 102 can have a thickness of not greater than 200 microns, such as not greater than 150 microns, not greater than 100 microns, not greater than 75 microns, not greater than 50 microns, not greater than 45 microns, such as not greater than 40 microns, no greater than 35 microns, not greater than 30 microns, no greater than 25 microns, not greater than 20 microns, not greater than 15 microns, or even not greater than 10 microns. As increased thickness can tend to increase electrical resistance, the opposite tends to be true, where a reduced thickness can tend to reduce electrical resistance. However, a reduced thickness may also tend to reduce structural integrity. As disclosed herein, the electrolyte 102 can have a thickness of at least 5 microns. As further disclosed herein, the electrolyte 102 can have a thickness of at least 10 microns, such as at least 15 microns, at least 20 microns, at least 25 microns, at least 30 microns, at least 35 microns, at least 40 microns, or even at least 45 microns. After reading the specification, a skilled artisan will appreciate that the electrolyte 102 can have a thickness within a range of any maximum or minimum value indicated above. For example, the electrolyte 102 can have a thickness in a range of 100 microns to 250 microns, 5 microns to 250 microns, 5 microns to 100 microns, 5 microns to 20 microns, or even in a range of 10 microns to 20 microns.

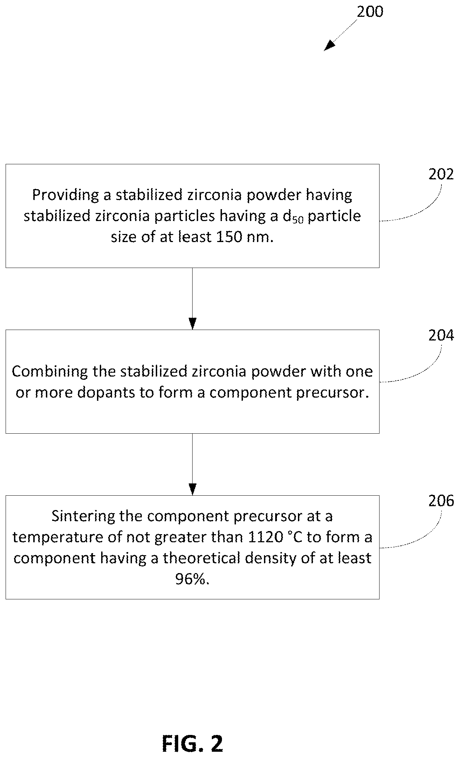

Referring to FIG. 2, a particular method of forming an electrolyte of a solid oxide fuel cell article is illustrated and generally designated 200. The method 200 includes, at step 202, providing a stabilized zirconia powder having stabilized zirconia particles having a d₅₀ particle size of at least 150 nm. As discussed herein, a component of an SOFC, such as an electrolyte, can include a hard, ceramic compound metal oxide, such as zirconium oxide. Moreover, the ceramic compound metal oxide can include a stabilizer to stabilize a particular phase of the ceramic compound metal oxide. For example, zirconia includes tetragonal t-ZrO₂ at its peak sintering temperature. However, the tetragonal t-ZrO₂ may transition to monoclinic m-ZrO₂ at a tetragonal to monoclinic (t-m) phase transformation temperature that is less than the peak sintering temperature. The zirconia may change volume during the t-m phase transformation. For example, the change in volume of the zirconia may be in a range of between about 3 vol% and about 5 vol%. The tendency of a material to change volume in response to a change in temperature can be defined by a coefficient of thermal expansion (CTE), which relates to the sintering shrinkage or densification of a component. Thermal stress and cracking may be caused by a CTE mismatch of the ceramic compound metal oxide with other components of the SOFC article during operation of the SOFC, and particularly during fabrication of the SOFC. Thus, a mismatch in CTEs of different components limits certain processing options during SOFC fabrication, such as co-sintering of the different components.

A stabilized ceramic compound metal oxide described herein can include a stabilized zirconia. In an example, the stabilized zirconia can include zirconia (ZrO₂) with additions of one or more stabilizers, such as, for example, magnesia (MgO), calcia (CaO), ceria (Ce0₂), scandia (Sc₂O₃), yttria (Y₂O₃), or any combination thereof. In a particular example, the stabilized zirconia can include yttria-stabilized zirconia (YSZ). After reading the specification, a skilled artisan will appreciate that a stabilizer is not a dopant.

In accordance with an example, the stabilized zirconia can be partially or fully stabilized, and the stabilizer can be present in the zirconia in a particular mol%. For example, the stabilizer can be present in the zirconia at least 3 mol%, such as at least 4 mol%, at least 5 mol%, at least 6 mol%, at least 7 mol%, at least 8 mol%, at least 9 mol%, or even at least 10 mol%. In a non-limiting example, the stabilizer can be present in the zirconia not greater than 12 mol%, such as not greater than 10 mol%, not greater than 9 mol%, not greater than 8 mol%, not greater than 7 mol%, not greater than 7 mol%, not greater than 6 mol%, not greater than 5 mol%, not greater than 4 mol%, or even not greater than 3 mol%. After reading the specification, a skilled artisan will appreciate that the stabilizer can be present in the zirconia within a range of any maximum or minimum value noted above. For example, the stabilizer can be present in the zirconia within a range of 3 mol% to 10 mol%, such as within a range of 6 mol% to 10 mol%. In a particular example, the stabilized zirconia can include zirconia stabilized by 8 mol% yttria (ZrO₂-8%Y₂O₃, or 8YSZ).

Un-doped YSZ is useful as an electrolyte of an SOFC as it has a high oxygen ion conductivity and is quite stable in both oxidant and fuel atmospheres. However the peak sintering temperature of YSZ limits its application in some areas, such as co-firing a YSZ electrolyte with another material having a significantly different sintering temperature, and thus limits the possibility of reducing the sintering steps during cell manufacturing. For example, commercially available yttria-stabilized zirconia powder, such as TZ-8Y powder from Tosoh (Tosoh USA, Inc., Grove City, Ohio), has a sintering temperature of about 1280 °C. In comparison, commonly used cathode materials, such as lanthanum strontium manganite (LSM) or lanthanum calcium manganite (LCM), typically have peak sintering temperatures of around 1100 °C. A significant difference in peak sintering temperatures of materials co-fired to form two or more SOFC components, such as a YSZ electrolyte and an LSM cathode, can cause defects such as cracks in one or more of the co-fired components. Thus, components with significantly different peak sintering temperatures (or different CTEs) typically require separate sintering steps during cell manufacturing.

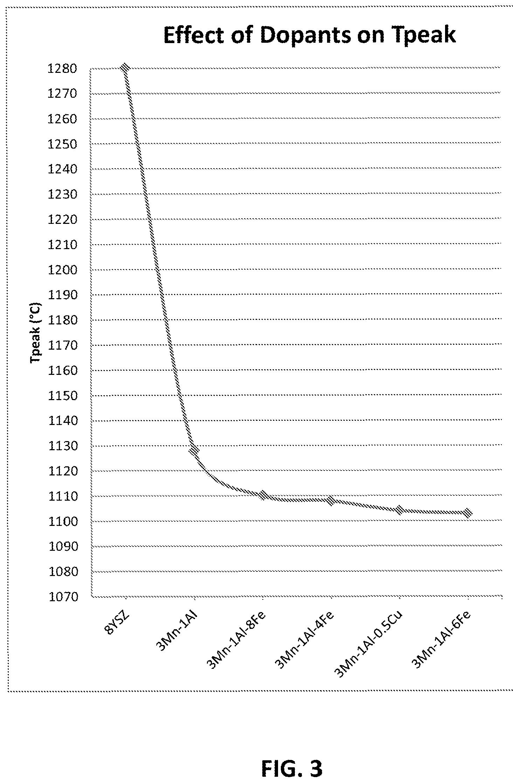

Some methods have been used to lower the peak sintering temperature of YSZ to as low as about 1280 °C. FIG. 3 includes a graph that illustrates some examples of doped YSZ and their respective peak sintering temperatures, as will be discussed further herein. For reference, FIG. 3 illustrates 8 mol% yttria-stabilized zirconia (8YSZ) having a peak sintering temperature of about 1280 °C. Methods for lowering the peak sintering temperature of stabilized zirconia can include certain pressure assisted sintering operations or the addition of certain sintering aids. One particular method for reducing the peak sintering temperature of a stabilized zirconia can include the use of a stabilized zirconia having a smaller d₅₀ particle size. Commercially available yttria-stabilized zirconia powder, such as TZ-8Y powder from Tosoh (Tosoh USA, Inc., Grove City, Ohio), includes stabilized zirconia particles having a d₅₀ particle size in a range of about 150 nm to about 300 nm. Reducing the d₅₀ particle size to less than about 150 nm can be accomplished, for example, by ball milling or attrition milling processes. However, such processes for reducing the d₅₀ particle size require an additional step in the overall process of forming an SOFC. Additional processing steps can add significant cost to the overall process, as well as create additional opportunities for errors or defects to occur.

As disclosed herein, a stabilized zirconia can have a peak sintering temperature (Tₚₑₐₖ) of not greater than 1120 °C and can be formed from stabilized zirconia particles having a d₅₀ particle size of at least 150 nm. For example, the stabilized zirconia particles can have a d₅₀ particle size of at least 160 nm, such as at least 170 nm, at least 180 nm, at least 190 nm, at least 200 nm, at least 210 nm, at least 220 nm, at least 230 nm, at least 240 nm, at least 250 nm, at least 260 nm, at least 270 nm, at least 280 nm, or at least 290 nm. In an example, the stabilized zirconia particles can comprise a d₅₀ particle size of not greater than 400 nm. A component formed of stabilized zirconia having a d₅₀ particle size of greater than 400 nm can tend to have poor sinterability and poor mechanical strength. As disclosed herein, the stabilized zirconia particles can have a d₅₀ particle size of not greater than 350 nm, such as not greater than 300 nm, not greater than 290 nm, not greater than 280 nm, not greater than 279 nm, not greater than 260 nm, not greater than 250 nm, not greater than 240 nm, not greater than 230 nm, not greater than 220 nm, not greater than 210 nm, not greater than 200 nm, not greater than 190 nm, not greater than 180 nm, not greater than 170 nm, or not greater than 160 nm. After reading the specification, a skilled artisan will appreciate that the stabilized zirconia particles can have a d₅₀ particle size within a range of any maximum or minimum value indicated above. For example, the stabilized zirconia particles can have a d₅₀ particle size in a range of 150 nm to 400 nm, 150 nm to 300 nm, 170 nm to 280 nm, or 200 nm to 250 nm.

Referring back to FIG. 2, the method 200 further includes, at step 204, combining the stabilized zirconia powder with one or more dopants to form a component precursor, such as an electrolyte precursor. As disclosed herein, the stabilized zirconia powder (e.g., YSZ) can be combined with the one or more dopants described herein, such as copper (Cu), silver (Ag), zinc (Zn), manganese (Mn), aluminum (Al), iron (Fe), cobalt (Co), nickel (Ni), or any combination thereof. According to the present invention, the stabilized zirconia powder is combined with at least three dopants including Mn, Al, and Fe. The stabilized zirconia powder can be combined with a particular amount of one or more of each dopant. For example, the stabilized zirconia powder can be combined with Mn and one or more of the aforementioned dopants. In another example, the stabilized zirconia powder can be combining with Mn and Al, in addition to one or more of the aforementioned dopants. The amount of dopant(s) present can be expressed as an atomic percent (at%).

As disclosed herein, in an example including Mn, the component precursor can include Mn in an amount of not greater than 5 at%, such as not greater than 4 at%, or not greater than 3 at%. In a non-limiting example, the component precursor can include Mn in an amount of at least 1 at%, such as at least 2 at%, or at least 3 at%. After reading the specification, a skilled artisan will appreciate that the component precursor can include Mn in an amount in a range of any maximum or minimum value indicated above. For example, the component precursor can include Mn in an amount in a range of 1 at% to 5 at%, or 2 at% to 4 at%. In a particular example, the component precursor can include Mn in an amount of 2.5 at% to 3.5 at%.

As disclosed herein, in an example including Al, the component precursor can include Al in an amount of at least 0.5 at%, such as at least 0.75 at%, at least 1 at%, at least 1.5 at%, at least 2 at%, at least 2.5 at%, or at least 3 at%. In an example, the component precursor can include Al in an amount of not greater than 3 at%, such as not greater than 2.5 at%, not greater than 2 at%, not greater than 1.5 at%, not greater than 1 at%, or not greater than 0.5 at%. After reading the specification, a skilled artisan will appreciate that the component precursor can include Al in an amount in a range of any maximum or minimum value indicated above. For example, the component precursor can include Al in an amount in a range of 0.5 at% and 2.5 at%, or 0.5 at% to 2 at%. In a particular example, the component precursor can include Al in an amount of 0.5 at% to 1.5 at%.

As disclosed herein, in an example including Fe, the component precursor can include Fe in an amount in an amount of at least 1 at%, such as at least 2 at%, at least 3 at%, at least 4 at%, at least 5 at%, or at least 6 at%. In an example, the component precursor can include Fe in an amount in an amount of not greater than 10 at%, such as not greater than 9 at%, not greater than 8 at%, not greater than 7 at%, not greater than 6 at%, not greater than 5 at%, not greater than 4 at%, or not greater than 3 at%. After reading the specification, a skilled artisan will appreciate that the component precursor can include Fe in an amount in an amount in a range of any maximum or minimum value indicated above. For example, the component precursor can include Fe in an amount in an amount in a range of 1 at% to 10 at%, 2 at% to 10 at%, 3 at% to 9 at%, 4 at% to 8 at%. In a particular example, the component precursor can include Fe in an amount in an amount of 5 at% to 6 at %.

As disclosed herein, in an example including Co, the component precursor can include Co in an amount in an amount of at least 1 at%, such as at least 2 at%, at least 3 at%, at least 4 at%, at least 5 at%, or at least 6 at%. In an example, the component precursor can include Co in an amount in an amount of not greater than 10 at%, such as not greater than 9 at%, not greater than 8 at%, not greater than 7 at%, not greater than 6 at%, not greater than 5 at%, not greater than 4 at%, or not greater than 3 at%. After reading the specification, a skilled artisan will appreciate that the component precursor can include Co in an amount in an amount in a range of any maximum or minimum value indicated above.

As disclosed herein, in an example including Ni, the component precursor can include Ni in an amount in an amount of at least 1 at%, such as at least 2 at%, at least 3 at%, at least 4 at%, at least 5 at%, or at least 6 at%. In an example, the component precursor can include Ni in an amount in an amount of not greater than 10 at%, such as not greater than 9 at%, not greater than 8 at%, not greater than 7 at%, not greater than 6 at%, not greater than 5 at%, not greater than 4 at%, or not greater than 3 at%. After reading the specification, a skilled artisan will appreciate that the component precursor can include Ni in an amount in an amount in a range of any maximum or minimum value indicated above.

As disclosed herein, in an example including Cu, the component precursor can include Cu in an amount in an amount of at least 0.1 at%, such as at least 0.2 at%, at least 0.3 at%, at least 0.4 at%, at least 0.5 at%, at least 0.6 at%, at least 0.7 at%, at least 0.8 at%, at least 0.9 at%, or at least 1 at%. In an example, the component precursor can include Cu in an amount in an amount of not greater than 1 at%, such as not greater than 0.9 at%, not greater than 0.8 at%, not greater than 0.7 at%, not greater than 0.6 at%, not greater than 0.5 at%, not greater than 0.4 at%, not greater than 0.3 at%, not greater than 0.2 at%, or not greater than 0.1 at%. After reading the specification, a skilled artisan will appreciate that the component precursor can include Cu in an amount in an amount in a range of any maximum or minimum value indicated above. For example, the component precursor can include Cu in an amount in an amount in a range of 0.1 at% to 1 at%, 0.2 at% to 0.9 at%, 0.3 at% to 0.8 at%, or 0.4 at% to 0.7 at%. In a particular example, the component precursor can include Cu in an amount in an amount of 0.4 at% to 0.6 at%.

As disclosed herein, in an example including Ag, the component precursor can include Ag in an amount in an amount of at least 0.1 at%, such as at least 0.2 at%, at least 0.3 at%, at least 0.4 at%, at least 0.5 at%, at least 0.6 at%, at least 0.7 at%, at least 0.8 at%, at least 0.9 at%, or at least 1 at%. In an example, the component precursor can include Ag in an amount in an amount of not greater than 1 at%, such as not greater than 0.9 at%, not greater than 0.8 at%, not greater than 0.7 at%, not greater than 0.6 at%, not greater than 0.5 at%, not greater than 0.4 at%, not greater than 0.3 at%, not greater than 0.2 at%, or not greater than 0.1 at%. After reading the specification, a skilled artisan will appreciate that the component precursor can include Ag in an amount in an amount in a range of any maximum or minimum value indicated above.

As disclosed herein, in an example including Zn, the component precursor can include Zn in an amount in an amount of at least 0.1 at%, such as at least 0.2 at%, at least 0.3 at%, at least 0.4 at%, at least 0.5 at%, at least 0.6 at%, at least 0.7 at%, at least 0.8 at%, at least 0.9 at%, or at least 1 at%. In an example, the component precursor can include Zn in an amount in an amount of not greater than 1 at%, such as not greater than 0.9 at%, not greater than 0.8 at%, not greater than 0.7 at%, not greater than 0.6 at%, not greater than 0.5 at%, not greater than 0.4 at%, not greater than 0.3 at%, not greater than 0.2 at%, or not greater than 0.1 at%. After reading the specification, a skilled artisan will appreciate that the component precursor can include Zn in an amount in an amount in a range of any maximum or minimum value indicated above.

In examples described herein, a component precursor can include a stabilized zirconia powder combined with one or more dopants to provide a component precursor having a peak sintering temperature (Tₚₑₐₖ) of not greater than about 1120 °C. A component precursor having a peak sintering temperature (Tₚₑₐₖ) of not greater than about 1120 °C may more closely approximate the peak sintering temperature of other SOFC components or their precursors, which may enable fewer fabrication steps, such as through co-sintering the component precursor of the examples described herein with one or more other SOFC components or their precursors. A component precursor having a peak sintering temperature (Tₚₑₐₖ) of not greater than about 1120 °C may also enable low temperature sintering so that inter-diffusion and formation of resistive phases can be avoided. As disclosed herein, in an example, a component precursor can have a peak sintering temperature (Tₚₑₐₖ) of not greater than about 1119 °C, such as not greater than about 1118 °C, not greater than about 1117 °C, not greater than about 1116 °C, not greater than about 1115 °C, not greater than about 1114 °C, not greater than about 1113 °C, not greater than about 1112 °C, not greater than about 1111 °C, not greater than about 1110 °C, not greater than about 1109 °C, not greater than about 1108 °C, not greater than about 1107 °C, not greater than about 1106 °C, not greater than about 1105 °C, not greater than about 1104 °C, not greater than about 1103 °C, not greater than about 1102 °C, not greater than about 1101 °C, not greater than about 1100 °C, not greater than about 1095 °C, not greater than about 1090 °C, not greater than about 1185 °C, or even not greater than about 1080 °C. In an illustrative example, a component precursor can include a peak sintering temperature (Tₚₑₐₖ) of at least about 1070 °C, such as at least about 1075 °C. After reading the specification, a skilled artisan will appreciate that the component precursor can include a peak sintering temperature (Tₚₑₐₖ) within a range of any maximum or minimum value indicated above. As disclosed herein, in an example, the peak sintering temperature (Tₚₑₐₖ) can be in a range of 1070 to 1120 °C, or 1070 °C to 1110 °C.

Referring back to FIG. 2, as illustrated in step 206 of method 200, the component precursor can be sintered at a temperature of not greater than about 1120 °C to form a component having a theoretical density of at least 96%. Notably, a sintering temperature of not greater than 1120 °C is sufficient to cause the precursor composition to achieve a theoretical density of at least 96%. Although not wishing to be bound to any particular theory, it is believed that the one or more dopants enable the stabilized zirconia precursor to achieve a theoretical density of at least 96% at peak sintering temperature (Tₚₑₐₖ) of not greater than 1120 °C. In accordance with an example, the component precursor can be sintered at a temperature of not greater than about 1120 °C to form a component having a theoretical density of at least at least about 96%, such as at least about 97%, at least about 98%, at least about 99%, or even 100%. After reading the specification, a skilled artisan will appreciate that the component precursor can be sintered at a temperature of not greater than about 1120 °C to form a component having a theoretical density within a range of any maximum or minimum value indicated above.

Conversely, the component precursor can be sintered at a temperature of not greater than about 1120 °C to form a component having a particular porosity. As a natural consequence of processing, some residual porosity may remain in the resulting component, such as an electrolyte component. However, any such residual porosity is typically closed porosity and not an interconnected network. In accordance with an example, the component precursor can be sintered at a temperature of not greater than about 1120 °C to form a component having a porosity of not greater than about 5 vol%, such as not greater than about 4 vol%, not greater than about 3 vol%, not greater than about 2 vol%, or not greater than about 1 vol%. After reading the specification, a skilled artisan will appreciate that the component precursor can be sintered at a temperature of not greater than about 1120 °C to form a component having a porosity within a range of any maximum or minimum value indicated above.

In an embodiment, the component precursor includes stabilized zirconia powder combined with at least three different dopants and the component precursor can have a peak sintering temperature (Tₚₑₐₖ) of not greater than about 1120 °C. As disclosed herein, the component precursor can include stabilized zirconia power combined with at least three different dopants selected from the group consisting of copper (Cu), silver (Ag), zinc (Zn), manganese (Mn), aluminum (Al), iron (Fe), cobalt (Co), and nickel (Ni). According to the present invention, the stabilized zirconia power is combined with at least three different dopants including Mn, Al, and Fe.

Sintering of the component precursor can be performed by any method known in the art, including pressureless sintering. However, defects caused by non-uniform particle packing, such as transient stresses, cracks, large pores or voids, do not disappear easily during pressureless sintering and consequently tend to limit densification. In an example, sintering the component precursor can include pressure assisted sintering, such as hot isostatic pressing (HIP), uniaxial hot pressing (HP), or sinter forging. In a particular example, sintering is performed by sinter forging.

In a particular example, the component precursor may be co-sintered with other or different components or component precursors used to form the SOFC article. For example, in an example, the component can be an electrolyte, and the electrolyte can be co-sintered with other components of the SOFC article, such as an anode layer, a cathode layer, or a combination thereof.

After sintering the component precursor to form a component of an SOFC, the component can include a stabilized zirconia and one or more dopants. As discussed herein, the component being formed of component precursors as described herein, a resulting component can include a stabilized zirconia and at least three different dopants. In a particular example, the stabilized zirconia can include Mn, Al, Cu, Fe, or any combination thereof. According to the present invention, the stabilized zirconia includes at least three different dopants including Mn, Al, and Fe.

As disclosed herein, each of the one or more dopants of the component can be present in a certain amount of the component. The amount of dopant present can be expressed as an atomic percent (at%). In an example including Mn, the Mn can be present in the component in an amount of not greater than 5 at%. For example, the Mn can be present in the component in an amount of not greater than 4 at%, such as or not greater than 3 at%. In another example, the Mn can be present in the component in an amount of at least 1 at%. For example, the Mn can be present in the component in an amount of at least 2 at%, such as at least 3 at%. After reading the specification, a skilled artisan will appreciate that Mn can be present in the component in an amount in a range of any maximum or minimum value indicated above. For example, the Mn can be present in the component in a range of 1 at% to 5 at%, or 2 at% to 4 at%. In a particular example, the Mn can be present in the component in an amount of 2.5 at% to 3.5 at%.

In an example including Al, the Al can be present in the component in an amount of at least 0.5 at%. For Example, the Al can be present in the component in an amount of at least 0.75 at%, such as at least 1 at%, at least 1.5 at%, at least 2 at%, at least 2.5 at%, or at least 3 at%. In an example, the Al can be present in the component in an amount of not greater than 3 at%. For example, the Al can be present in the component in an amount of not greater than 2.5 at%, such asnot greater than 2 at%, not greater than 1.5 at%, not greater than 1 at%, or not greater than 0.5 at%. After reading the specification, a skilled artisan will appreciate that Al can be present in the component in an amount in a range of any maximum or minimum value indicated above. For example, Al can be present in the component in a range of 0.5 at% and 2.5 at%, or 0.5 at% to 2 at%. In a particular example, the Al can be present in the component in an amount of 0.5 at% to 1.5 at%.

In an example including Fe, the Fe can be present in the component in an amount of at least 1 at%. For example the Fe can be present in the component in an amount of at least 2 at%, such as at least 3 at%, at least 4 at%, at least 5 at%, or at least 6 at%. In an example, the Fe can be present in the component in an amount of not greater than 10 at%. For example, the Fe can be present in the component in an amount of not greater than 9 at%, such as not greater than 8 at%, not greater than 7 at%, not greater than 6 at%, not greater than 5 at%, not greater than 4 at%, or not greater than 3 at%. After reading the specification, a skilled artisan will appreciate that Fe can be present in the component in an amount in a range of any maximum or minimum value indicated above. For example, Fe can be present in the component in a range of 1 at% to 10 at%, 2 at% to 10 at%, 3 at% to 9 at%, 4 at% to 8 at%. In a particular example, the Fe can be present in the component in an amount of 5 at% to 6 at %.

In an example including Cu, the Cu can be present in the component in an amount of at least 0.1 at%.For example, the Cu can be present in the component in an amount of at least 0.2 at%, such as at least 0.3 at%, at least 0.4 at%, at least 0.5 at%, at least 0.6 at%, at least 0.7 at%, at least 0.8 at%, at least 0.9 at%, or at least 1 at%. In an example, the Cu can be present in the component in an amount of not greater than 1.2 at%. For example, the Cu can be present in the component in an amount of not greater than 1 at%, such as not greater than 0.9 at%, not greater than 0.8 at%, not greater than 0.7 at%, not greater than 0.6 at%, not greater than 0.5 at%, not greater than 0.4 at%, not greater than 0.3 at%, not greater than 0.2 at%, or not greater than 0.1 at%. After reading the specification, a skilled artisan will appreciate that Cu can be present in the component in an amount in a range of any maximum or minimum value indicated above. For example, Cu can be present in the component in a range of 0.1 at% to 1 at%, 0.2 at% to 0.9 at%, 0.3 at% to 0.8 at%, or 0.4 at% to 0.7 at%. In a particular example, the Cu can be present in the component in an amount of 0.4 at% to 0.6 at%.

According to the present invention, the stabilized zirconia includes Mn in an amount of not greater than 5 at%, A1 in an amount of not greater than 3 at%, and Fe in an amount of at least 4 at% and not greater than 8 at%.

A solid oxide fuel cell including a component according to at least one example herein can be configured to provide an average initial cell open circuit voltage (OCV) that is not greater than that of a cell having an electrolyte including un-doped 8YSZ, which is typically greater than 1.10V. In accordance with an example, a component having three or more dopants can provide an average initial cell OCV of not greater than 1.10V at 800 °C. In a particular example, a component according to examples herein can provide an average initial cell OCV of not greater than 1.09V, such as not greater than 1.08V, not greater than 1.07V, or even not greater than 1.06V. It will be appreciated that a component according to examples herein can provide an average initial cell OCV that is greater than the typical operation voltage in a final SOFC system, which is typically at least 0.75V.

A comparatively high average initial cell OCV can be attributed to an electrolyte having ionic conductivity. Although it is typically desired to obtain a high average initial cell OCV in order to obtain a correspondingly high powder density of a final SOFC, Applicants have discovered that a small electronic conductivity is desirable and that electrolytes providing solely ionic conductivities can experience a relatively higher rate of degradation than electrolytes that have a small amount of electronic conductivity. Applicants have also discovered that a small amount of electronic conductivity can be introduced into an electrolyte by the use of select dopants and their combinations. Thus, Applicants have discovered that electrolytes having an average initial cell OCV that is not greater than 1.10V can enjoy reduced degradation over time than an electrolyte having an average initial cell OVC of greater than 1.10V. In particular examples, electrolytes according to examples herein having an average initial cell OCV that is not greater than 1.08V can enjoy reduced degradation over than an electrolyte having an average initial cell OCV of greater than 1.08V.

Thus, doping a highly ionic conductor, such as 8YSZ, with an electronic dopant, such as Mn, Al, Fe, or Cu, for example, can reduce the average initial cell OCV beyond that of un-doped 8YSZ. In particular examples, doping 8YSZ with three or more different electronic dopants, including Mn, Al, Fe, or Cu, for example, can reduce the average initial cell OCV beyond that of 8YSZ doped with less than three different dopants.

### EXAMPLES

The examples are given by way of illustration only and does not limit the scope of the present invention as defined in the appended claims. The examples demonstrate the formation of a component of an SOFC in accordance with illustrative, non-limiting embodiments.

The starting powder for preparing the following several samples of the stabilized zirconia component was 8 mol% YSZ (8YSZ). The 8YSZ powder had a d₅₀ particle size of at least 150 nm. No further processing to the 8YSZ was performed to reduce the d₅₀ particle size.

A control sample was prepared that included un-doped 8YSZ, and several samples were prepared that included 8YSZ doped with one or more dopants. The one or more dopants included Mn, Al, Fe, and Cu. The sample components prepared included a sample of 8YSZ, a sample of 8YSZ doped with 3at% Mn, and 1 at% Al (3Mn-1Al), a sample according to the present invention of 8YSZ doped with 3at% Mn, 1 at% Al, and 8 at% Fe (3Mn-1Al-8Fe), a sample according to the present invention of 8YSZ doped with 3at% Mn, 1 at% Al, and 4 at% Fe (3Mn-1Al-4Fe), a sample according to the present invention of 8YSZ doped with 3at% Mn, 1 at% Al, and 6Fe (3Mn-1Al-6Fe), a sample of 8YSZ doped with 3at% Mn, 1 at% Al, and 0.5 at% Cu (3Mn-1Al-0.5Cu), and a sample of 8YSZ doped with 1 at% Cu (1Cu).

Dopant powders were prepared by a heterogeneous precipitation method. Hydroxide precursor powders of the dopants were precipitated from their respective soluble salts. In particular, powders of Al(NO₃)₃·9H₂O, Mn(NO₃)₂·6H₂O, and Fe(NO₃)₃·9H₂O were dissolved in deionized (DI) water. The solutions were stirred and NH₄·NH₃ was added if necessary to adjust pH value. In preparing a dopant solution having Cu, CuO powder having a d₅₀ particle size of not greater than 50 nm was added directly into the solution without heterogeneous precipitation.

The prepared dopants were then mixed with 8YSZ powder. Weighted 8YSZ powder was poured into the prepared dopant solutions to form a slurry. The slurry was ball-milled and dried into powder. The dried powder was crashed, meshed, and heated to 600 °C to form calcined metal oxide-doped 8YSZ powders. The calcined powders were uniaxially pressed into pellets having heights of 5.0 mm and diameters of 6.5 mm. The green density for all samples was about 40%. The sample components were then tested to determine their respective peak sintering temperatures (Tₚₑₐₖ) and anisotropy factors.

### EXAMPLE 1 - Tₚₑₐₖ

Dilometery sintering was performed to determine peak sintering temperatures (Tₚₑₐₖ). Densification rates of the samples can be obtained by the derivative curves of the linear shrinkage of the samples. Several sintering plans were performed to determine peak sintering temperatures (Tₚₑₐₖ). For example, some sintering plans included heating rates of 15 °C/min, 10 °C/min, 2 °C/min, 1 °C/min, or combinations thereof. Some sintering plans also included one or more "holding" temperatures, or isothermal holds, where a sample was maintained at one or more particular temperatures for a predetermined amount of time, typically longer than the heating rates.

FIG. 3 illustrates the respective peak sintering temperatures (Tₚₑₐₖ) of each of the component samples. The tested peak sintering temperatures (Tₚₑₐₖ) are also listed in Table 1.

**Table 1 - Tₚₑₐₖ for tested powders**

| **Powders** | **Tₚₑₐₖ (°C)** |
|---|---|
| 8YSZ | 1280 |
| 3Mn-1Al | 1128 |
| 3Mn-1Al-8Fe | 1110 |
| 3Mn-1Al-4Fe | 1108 |
| 3Mn1-Al-6Fe | 1103 |
| 3Mn-1A-0.5Cu 1 | 1104 |

Component samples of 8YSZ doped with two dopants (co-doped) including Mn and Al are described in US Patent No. 8,357,474, assigned to Saint-Gobain Ceramics & Plastics., Inc., the assignee of the present application. For example, YSZ can be doped with 3 at% Mn and 1 at% Al (3Mn-1Al). As described therein, and as illustrated in FIG. 3 and Table 1, 3Mn-1Al can have a peak sintering temperature (Tₚₑₐₖ) of about 1128 °C. However, further progress has been made to reducing the peak sintering temperature of YSZ, as described with respect to embodiments herein. For example, as illustrated in FIG. 3 and Table 1, component samples as described herein, such as 3Mn-1Al-8Fe, 3Mn-1Al-4Fe, 3Mn1-Al-6Fe, 3Mn-1A-0.5Cu, and1 Cu, all obtained peak sintering temperatures (Tpeak) of not greater than 1120 °C and were formed from stabilized zirconia particles having a d₅₀ particle size of at least 150 nm.

In accordance with an embodiment, a component including a stabilized zirconia doped with 3Mn-1Al-8Fe can have a peak sintering temperature (Tₚₑₐₖ) of less than 1120 °C. For example, as illustrated in FIG. 3, stabilized zirconia doped with 3Mn-1Al-8Fe can have a Tₚₑₐₖ in a range of 1100 °C to 1120 °C, and particularly about 1110 °C.

In accordance with an embodiment, a component including a stabilized zirconia doped with 3Mn-1Al-4Fe can have a peak sintering temperature (Tₚₑₐₖ) of less than 1120 °C. For example, as illustrated in FIG. 3, stabilized zirconia doped with 3Mn-1Al-4Fe can have a Tₚₑₐₖ in a range of 1100 °C to 1120 °C, and particularly about 1108 °C.

In accordance with an embodiment, a component including a stabilized zirconia doped with 3Mn-1Al-6Fe can have a peak sintering temperature (Tₚₑₐₖ) of less than 1120 °C. For example, as illustrated in FIG. 3, stabilized zirconia doped with 3Mn-1Al-6Fe can have a Tₚₑₐₖ in a range of 1100 °C to 1120 °C, and particularly about 1103 °C. In a particular embodiment, a peak sintering temperature (Tₚₑₐₖ) as low as 1076 °C has been achieved.

A component including a stabilized zirconia doped with 3Mn-1Al-0.5Cu can have a peak sintering temperature (Tₚₑₐₖ) of less than 1120 °C. For example, as illustrated in FIG. 3, stabilized zirconia doped with 3Mn-1Al-0.5Cu can have a Tₚₑₐₖ in a range of 1100 °C to 1120 °C, and particularly about 1104 °C. In a particularexample, a peak sintering temperature (Tₚₑₐₖ) as low as 1094 °C has been achieved.

### EXAMPLE 2 - Conductivity

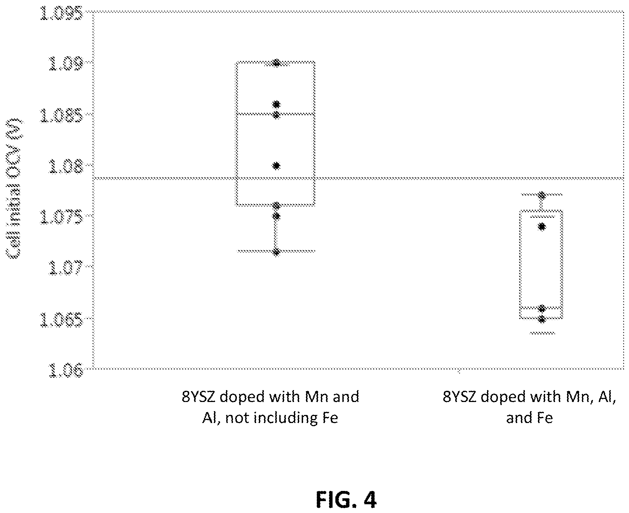

Initial cell open circuit voltage (OCV) experiments were conducted on an electrolyte component including 8YSZ doped with Mn and Al, and an electrolyte component including 8YSZ doped with Mn, Al, and Fe. The electrolyte components were used to form single cell SOFCs including the electrolyte component, an anode, and a cathode. The finally formed SOFCs were then tested for initial cell OCV according to a standard method in the art. For example, for short term tests, after a stack is set up, both air side and fuel side leak rates are measured. The fuel and air flow rates are 300 and 900 sccm, respectively. If a stack passes the leak test, it is heated up at 2°C/min until reaching 800 °C. At that point, hydrogen concentration is increased step-by-step to reduce NiO. When OCV is stable at 100% H₂ (or about 98.3% H₂ + 1.7% H₂O), three sets of I-V curves and impedances are taken at 800 °C. The results are illustrated in Tables 2 and 3 below, and in FIG. 4.

Table 2 illustrates the results of cell initial OCV of 8YSZ doped with Mn and Al. As illustrated in Table 2, the cell was tested 11 times (or 11 identical cells were tested), and the average cell initiall OCV was 1.0830455. Table 3 illustrate the results of cell initial OCV of 8YSZ doped with Mn, Al, and Fe. As illustrated in Table 3, the cell was tested 5 times, and the average cell initiall OCV was 1.0694.

FIG. 4 includes "box plots" illustrating the results of the electrolytes illustrated in Tables 2 and 3, respectively. In particular, the box plots of FIG. 4 illustrate the quartile results of Tables 2 and 3, respectively.

**Table 2 - Cell initial OCV of 8YSZ doped with Mn and Al measured at 800 °C.**

| **8YSZ with Mn and Al** | |
|---|---|
| Mean | 1.0830455 |
| Std Dev | 0.0068719 |
| Maximum | 1.09 |
| 75% quartile | 1.09 |
| Median | 1.085 |
| 25% quartile | 1.076 |
| Minimum | 1.0715 |
| N | 11 |

**Table 3 - Cell initial OCV of 8YSZ doped with Mn, Al, and Fe measured at 800 °C.**

| **8YSZ with Mn, Al, and Fe** | |
|---|---|
| Mean | 1.0694 |
| Std Dev | 0.0056833 |
| Maximum | 1.077 |
| 75% quartile | 1.076 |
| Median | 1.066 |
| 25% quartile | 1.065 |
| Minimum | 1.065 |
| N | 5 |

Note that not all of the activities described above in the general description or the examples are required, that a portion of a specific activity may not be required, and that one or more further activities may be performed in addition to those described. Still further, the order in which activities are listed is not necessarily the order in which they are performed.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

## Claims

1. A component of a solid oxide fuel cell comprising:
an electrolyte including a stabilized zirconia doped with at least three different dopants including Mn, Al, and Fe, wherein the stabilized zirconia includes Mn in an amount of not greater than 5 at%, Al in an amount of not greater than 3 at%, and Fe in an amount of at least 4 at% and not greater than 8 at%, wherein the electrolyte has a density of at least 92% of theoretical density, calculated based on Archimedes' principle.

2. The component of claim 1, wherein the zirconia is stabilized by yttria within a range of 3 mol% to 10 mol%.

3. The component of claim 1, wherein the electrolyte has a density of at least 96% of theoretical density.

4. The component of any of the preceding claims, wherein the Mn is present in an amount of at least 1 at% and not greater than 5 at%.

5. A method of forming a component of a solid oxide fuel cell comprising: providing a stabilized zirconia powder having stabilized zirconia particles having a d50 particle size of at least 150 nm; combining the stabilized zirconia powder with at least three dopants including Mn, Al, and Fe to form a component precursor; and sintering the component precursor at a temperature of not greater than 1120 °C to form a component having a density of at least 96% of theoretical density, calculated based on Archimedes' principle.

6. The method of claim 5, wherein the stabilized zirconia includes Mn in an amount of not greater than 5 at%, Al in an amount of not greater than 3 at%, and Fe in an amount of at least 4 at% and not greater than 8 at%.

7. The method of claim 5 or 6, wherein the stabilized zirconia particles have a d50 particle size of not greater than 400 nm.

8. The method of any of claims 5 to 7, wherein the zirconia is stabilized by yttria within a range of 3 mol% to 10 mol%.

## Patentansprüche

1. Bestandteil einer Festoxidbrennstoffzelle, umfassend:
einen Elektrolyten, der ein stabilisiertes Zirkoniumoxid beinhaltet, das mit mindestens drei unterschiedlichen Dotierungsmitteln einschließlich Mn, Al und Fe dotiert ist, wobei das stabilisierte Zirkoniumoxid Mn in einer Menge von nicht mehr als 5 At.-%, Al in einer Menge von nicht mehr als 3 At.-% und Fe in einer Menge von mindestens 4 At.-% und nicht mehr als 8 At.-% beinhaltet, wobei der Elektrolyt bei Berechnung auf der Grundlage des archimedischen Prinzips eine Dichte von mindestens 92 % der theoretischen Dichte aufweist.

2. Bestandteil nach Anspruch 1, wobei das Zirkoniumoxid durch Yttriumoxid in einem Bereich von 3 mol-% bis 10 mol-% stabilisiert ist.

3. Bestandteil nach Anspruch 1, wobei der Elektrolyt eine Dichte von mindestens 96 % der theoretischen Dichte aufweist.

4. Bestandteil nach einem der vorhergehenden Ansprüche, wobei das Mn in einer Menge von mindestens 1 At.-% und nicht mehr als 5 At.-% vorliegt.

5. Verfahren zum Bilden eines Bestandteils einer Festoxidbrennstoffzelle, umfassend:
Bereitstellen eines stabilisierten Zirkoniumoxidpulvers, das stabilisierte Zirkoniumoxidpartikel aufweist, die eine d50-Partikelgröße von mindestens 150 nm aufweisen; Kombinieren des stabilisierten Zirkoniumoxidpulvers mit mindestens drei Dotierungsmitteln einschließlich Mn, Al und Fe, um einen Bestandteilvorläufer zu bilden; und Sintern des Bestandteilvorläufers bei einer Temperatur von nicht mehr als 1120 °C, um einen Bestandteil zu bilden, der bei Berechnung auf der Grundlage des archimedischen Prinzips eine Dichte von mindestens 96 % der theoretischen Dichte aufweist.

6. Verfahren nach Anspruch 5, wobei das stabilisierte Zirkoniumoxid Mn in einer Menge von nicht mehr als 5 At.-%, Al in einer Menge von nicht mehr als 3 At.-% und Fe in einer Menge von mindestens 4 At.-% und nicht mehr als 8 At.-% beinhaltet.

7. Verfahren nach Anspruch 5 oder 6, wobei die stabilisierten Zirkoniumoxidpartikel eine durchschnittliche d50-Partikelgröße von nicht mehr als 400 nm aufweisen.

8. Verfahren nach einem der Ansprüche 5 bis 7, wobei das Zirkoniumoxid durch Yttriumoxid in einem Bereich von 3 mol-% bis 10 mol-% stabilisiert ist.

## Revendications

1. Composant d'une pile à combustible à oxyde solide comprenant :
un électrolyte comprenant une zircone stabilisée dopée avec au moins trois dopants différents incluant Mn, Al et Fe, dans lequel la zircone stabilisée comprend Mn en une quantité qui ne dépasse pas 5 % atomique, Al en une quantité qui ne dépasse pas 3 % atomique, et Fe en une quantité d'au moins 4 % atomique et non supérieure à 8 % atomique, l'électrolyte ayant une densité d'au moins 92 % de la densité théorique, calculée sur la base du principe d'Archimède.

2. Composant selon la revendication 1, dans lequel la zircone est stabilisée par de l'oxyde d'yttrium dans une plage de 3 % en moles à 10 % en moles.

3. Composant selon la revendication 1, dans lequel l'électrolyte a une densité d'au moins 96 % de la densité théorique.

4. Composant selon l'une quelconque des revendications précédentes, dans lequel Mn est présent en une quantité d'au moins 1 % atomique et non supérieure à 5 % atomique.

5. Procédé de formation d'un composant d'une pile à combustible à oxyde solide comprenant : fournir une poudre de zircone stabilisée ayant des particules de zircone stabilisée ayant une taille de particules d50 d'au moins 150 nm ; combiner la poudre de zircone stabilisée avec au moins trois dopants incluant Mn, Al et Fe pour former un précurseur de composant ; et fritter le précurseur de composant à une température non supérieure à 1120 °C pour former un composant ayant une densité d'au moins 96 % de la densité théorique, calculée sur la base du principe d'Archimède.

6. Procédé selon la revendication 5, dans lequel la zircone stabilisée comprend Mn en une quantité non supérieure à 5 % atomique, Al en une quantité non supérieure à 3 % atomique et Fe en une quantité d'au moins 4 % atomique et non supérieure à 8 % atomique.

7. Procédé selon la revendication 5 ou 6, dans lequel les particules de zircone stabilisée ont une taille de particules d50 non supérieure à 400 nm.

8. Procédé selon l'une quelconque des revendications 5 à 7, dans lequel la zircone est stabilisée par de l'oxyde d'yttrium dans une plage de 3 % en moles à 10 % en moles.
